(19) **Europäisches Patentamt / European Patent Office / Office européen des brevets**

(11) **EP 4 174 988 A1**

(12) **EUROPEAN PATENT APPLICATION**
published in accordance with Art. 153(4) EPC

(43) Date of publication:
**03.05.2023 Bulletin 2023/18**

(21) Application number: **21834692.2**

(22) Date of filing: **10.06.2021**

(51) International Patent Classification (IPC):
***H01M 4/505*** (2010.01)   ***H01M 4/525*** (2010.01)

(52) Cooperative Patent Classification (CPC):
**H01M 4/505; H01M 4/525;** Y02E 60/10

(86) International application number:
**PCT/JP2021/022047**

(87) International publication number:
**WO 2022/004323 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020  JP 2020111817**

(71) Applicants:
• **SUMITOMO CHEMICAL COMPANY, LIMITED**
 **Tokyo 103-6020 (JP)**

• **Tanaka Chemical Corporation**
 **Fukui-shi, Fukui 910-3131 (JP)**

(72) Inventors:
• **KURODA Tomoya**
 **Fukui-shi, Fukui 910-3131 (JP)**
• **DEGURA Keiji**
 **Fukui-shi, Fukui 910-3131 (JP)**

(74) Representative: **Vossius & Partner**
 **Patentanwälte Rechtsanwälte mbB**
 **Siebertstraße 3**
 **81675 München (DE)**

(54) **POSITIVE ELECTRODE ACTIVE MATERIAL PRECURSOR FOR LITHIUM SECONDARY BATTERY, AND METHOD FOR PRODUCING POSITIVE ELECTRODE ACTIVE MATERIAL FOR LITHIUM SECONDARY BATTERY**

(57)     A precursor for a lithium secondary battery positive electrode active material containing at least a nickel atom, in which, in a volume-based cumulative particle size distribution curve that is obtained by laser diffraction type particle size distribution measurement, a particle diameter ($\mu$m) at which a cumulative volume fraction from a small particle side becomes 10% is defined as $D_{10}$, a particle diameter ($\mu$m) at which the cumulative volume fraction from the small particle side becomes 30% is defined as $D_{30}$, a particle diameter ($\mu$m) at which the cumulative volume fraction from the small particle side becomes 50% is defined as $D_{50}$, a particle diameter ($\mu$m) at which the cumulative volume fraction from the small particle side becomes 70% is defined as $D_{70}$, and a particle diameter ($\mu$m) at which the cumulative volume fraction from the small particle side becomes 90% is defined as $D_{90}$, the $D_{10}$, the $D_{30}$, the $D_{50}$, the $D_{70}$, and the $D_{90}$ satisfy (1) to (3) below.

(1)

$$(D_{50} - D_{10})/D_{30} \leq 0.6$$

(2)

$$(D_{90} - D_{50})/D_{70} \leq 0.6$$

(3)

$$0.90 \leq [(D_{50} - D_{10})/D_{30}]/[(D_{90} - D_{50})/D_{70}] \leq 1.10$$

**Description**

[Technical Field]

The present invention relates to a precursor for a lithium secondary battery positive electrode active material and a method for producing a lithium secondary battery positive electrode active material.

Priority is claimed on Japanese Patent Application No. 2020-111817, filed in Japan on June 29, 2020, the content of which is incorporated herein by reference.

[Background Art]

A precursor for a lithium secondary battery positive electrode active material becomes a raw material of a positive electrode active material that is used for a lithium secondary battery.

As an example of a method for producing a lithium secondary battery positive electrode active material, a method in which a precursor containing metal elements other than lithium is produced and the obtained precursor and a lithium compound are mixed and calcined is an exemplary example. Examples of the metal elements other than lithium include nickel, cobalt, manganese, aluminum, and the like.

Attempts of putting lithium secondary batteries into practical use not only for small-sized power sources in mobile phone applications, notebook personal computer applications, and the like but also for medium-sized or large-sized power sources in automotive applications, power storage applications, and the like have already been underway.

In order to improve the battery characteristics of lithium secondary batteries, studies are underway regarding a method for controlling the particle size distribution of a lithium secondary battery positive electrode active material. For example, it is known that the use of a positive electrode active material composed of particles having a narrow particle size distribution makes it possible to provide a lithium secondary battery having excellent battery characteristics such as cycle characteristics.

As such a technique, Patent Document 1 describes a positive electrode active material for a non-aqueous electrolyte secondary battery, in which [(d90 - d10)/average particle size], which is an index indicating the spread of a particle size distribution, satisfies 0.60 or less. Patent Document 1 discloses that a secondary battery for which such a positive electrode active material for a non-aqueous electrolyte secondary battery is used has a high capacity, high thermal safety, and a high output.

[Citation List]

[Patent Document]

[Patent Document 1]

JP-A-2015-43335

[Summary of Invention]

[Technical Problem]

When a lithium secondary battery positive electrode active material and an electrolyte solution come into contact with each other, the electrolyte solution may decompose to generate a gas. The generated gas causes battery swelling and shortens the lives of the batteries. From the viewpoint of suppressing battery swelling and producing a battery with a longer life than conventional batteries, there is room for improvement in a lithium secondary battery positive electrode active material and a precursor, which is a raw material of the positive electrode active material.

The present invention has been made in view of the above-described circumstances, and an object of the present invention is to provide a precursor for a lithium secondary battery positive electrode active material which suppresses battery swelling and from which a battery having a longer life can be produced and a method for producing a lithium secondary battery positive electrode active material.

[Solution to Problem]

The present invention includes the following [1] to [4].

[1] A precursor for a lithium secondary battery positive electrode active material containing at least a nickel atom, in which, in a volume-based cumulative particle size distribution curve that is obtained by laser diffraction type particle size distribution measurement, when a particle diameter ($\mu$m) at which a cumulative volume fraction from a small particle side becomes 10% is defined as $D_{10}$, a particle diameter ($\mu$m) at which the cumulative volume fraction from the small particle side becomes 30% is defined as $D_{30}$, a particle diameter ($\mu$m) at which the cumulative volume fraction from the small particle side becomes 50% is defined as $D_{50}$, a particle diameter ($\mu$m) at which the cumulative volume fraction from the small particle side becomes 70% is defined as $D_{70}$, and a particle diameter ($\mu$m) at which the cumulative volume fraction from the small particle side becomes 90% is defined as $D_{90}$, the $D_{10}$, the $D_{30}$, the $D_{50}$, the $D_{70}$, and the $D_{90}$ satisfy (1) to (3).

$$(1)\ (D_{50} - D_{10})/D_{30} \leq 0.6$$

$$(2)\ (D_{90} - D_{50})/D_{70} \leq 0.6$$

$$(3)\ 0.90 \leq [(D_{50} - D_{10})/D_{30}]/[(D_{90} - D_{50})/D_{70}] \leq 1.10$$

[2] The precursor for the lithium secondary battery positive electrode active material according to [1], which is represented by a composition formula (A).

$$Ni_{1-x-y}Co_xM_yO_z(OH)_{2-a} ... \qquad \text{Composition Formula (A)}$$

(In the composition formula (A), $0 \leq x \leq 0.45$, $0 \leq y \leq 0.45$, $0 \leq z \leq 3$, $-0.5 \leq \alpha \leq 2$, and M is one or more metal elements selected from the group consisting of Mg, Ca, Sr, Ba, Zn, B, Al, Mn, Ga, Ti, Zr, Ge, Fe, Cu, Cr, V, W, Mo, Sc, Y, Nb, La, Ta, Tc, Ru, Rh, Pd, Ag, Cd, In, and Sn.)

[3] The precursor for the lithium secondary battery positive electrode active material according to [1] or [2], in which a value of the $D_{50}$ is less than 10 $\mu$m.

[4] A method for producing a lithium secondary battery positive electrode active material, the method including a step of mixing the precursor for the lithium secondary battery positive electrode active material according to any one of [1] to [3] and a lithium compound and calcining the obtained mixture.

[Advantageous Effects of Invention]

According to the present invention, it is possible to provide a precursor for a lithium secondary battery positive electrode active material which suppresses battery swelling and from which a battery having a longer life than conventional batteries can be produced and a method for producing a lithium secondary battery positive electrode active material.

[Brief Description of Drawings]

FIG. 1A is a schematic configuration view showing an example of a lithium secondary battery.
FIG. 1B is a schematic configuration view showing the example of the lithium secondary battery.
FIG. 2A is a schematic view for describing the internal state of an electrode of a lithium secondary battery positive electrode active material produced using a precursor of the present invention.
FIG. 2B is a schematic view for describing the internal state of an electrode of a lithium secondary battery positive electrode active material produced using a precursor that is not the present invention.
FIG. 3 is a schematic view of a liquid cyclone type classifier.
FIG. 4 is a schematic view showing a laminate that an all-solid-state lithium-ion secondary battery includes.
FIG. 5 is a schematic view showing an entire configuration of the all-solid-state lithium-ion secondary battery.

[Description of Embodiments]

<Precursor for lithium secondary battery positive electrode active material>

The present embodiment is a precursor for a lithium secondary battery positive electrode active material containing at least a nickel atom. Hereinafter, "precursor for lithium secondary battery positive electrode active material" will be referred to as "precursor", and "lithium secondary battery positive electrode active material" will be referred to as "CAM" as an abbreviation for cathode active material for lithium secondary batteries in some cases.

CAM can be produced by mixing and calcining the precursor and a lithium compound.

In one aspect of the present embodiment, the precursor is composed of primary particles and secondary particles that are each an aggregate of primary particles.

In one aspect of the present embodiment, the precursor is a powder.

In the precursor, in a volume-based cumulative particle size distribution curve that is obtained by laser diffraction type particle size distribution measurement, a particle diameter ($\mu$m) at which a cumulative volume fraction from a small particle side becomes 10% is defined as $D_{10}$, a particle diameter ($\mu$m) at which the cumulative volume fraction from the small particle side becomes 30% is defined as $D_{30}$, a particle diameter ($\mu$m) at which the cumulative volume fraction from the small particle side becomes 50% is defined as $D_{50}$, a particle diameter ($\mu$m) at which the cumulative volume fraction from the small particle side becomes 70% is defined as $D_{70}$, and a particle diameter ($\mu$m) at which the cumulative volume fraction from the small particle side becomes 90% is defined as $D_{90}$, the $D_{10}$, the $D_{30}$, the $D_{50}$, the $D_{70}$, and the $D_{90}$ satisfy (1) to (3) below.

$$(1)\ (D_{50} - D_{10})/D_{30} \le 0.6$$

$$(2)\ (D_{90} - D_{50})/D_{70} \le 0.6$$

$$(3)\ 0.90 \le [(D_{50} - D_{10})/D_{30}]/[(D_{90} - D_{50})/D_{70}] \le 1.10$$

[Method for measuring particle size distribution]

The cumulative volume particle size distribution of the precursor is measured by the laser diffraction scattering method.

As the measuring method, for example, first, a powdery precursor is injected into a dispersion medium and stirred, thereby obtaining a dispersion liquid of the precursor. Next, the particle size distribution is measured using a laser diffraction type particle size distribution measuring instrument to obtain a volume-based cumulative particle size distribution curve.

As the dispersion medium, for example, ion exchange water can be used. In addition, as a dispersant, for example, a 20 mass% sodium hexametaphosphate aqueous solution can be used.

As the laser diffraction type particle size distribution measuring instrument, it is possible to use, for example, LA 950 manufactured by HORIBA, Ltd.

The powdery precursor is preferably injected in a manner that the transmittance at the time of measurement becomes 85 $\pm$ 3%.

In the volume-based cumulative particle size distribution curve obtained by the above-described method, a particle diameter ($\mu$m) at which a cumulative volume fraction from a small particle side becomes 10% is defined as $D_{10}$, a particle diameter ($\mu$m) at which the cumulative volume fraction from the small particle side becomes 30% is defined as $D_{30}$, a particle diameter ($\mu$m) at which the cumulative volume fraction from the small particle side becomes 50% is defined as $D_{50}$, a particle diameter ($\mu$m) at which the cumulative volume fraction from the small particle side becomes 70% is defined as $D_{70}$, and a particle diameter ($\mu$m) at which the cumulative volume fraction from the small particle side becomes 90% is defined as $D_{90}$. In the present specification, "particle diameter" refers to a secondary particle diameter.

$D_{10}$, $D_{30}$, and $D_{50}$ satisfy the following (1).

$$(1)\ (D_{50} - D_{10})/D_{30} \le 0.6$$

A precursor that satisfies (1) means that, in a plurality of particles having a particle diameter smaller than $D_{50}$, the variation in particle diameter between a plurality of particles is small.

In addition, the value of $(D_{50} - D_{10})/D_{30}$ is preferably 0.55 or less, more preferably 0.5 or less, and still more preferably 0.48 or less.

The lower limit value of $(D_{50} - D_{10})/D_{30}$ is, for example, 0.1 or more, 0.2 or more, or 0.3 or more.

The upper limit value and lower limit value of $(D_{50} - D_{10})/D_{30}$ can be randomly combined together.

Examples of the combinations of the upper limit value and lower limit value are shown below.

$$0.1 \leq (D_{50} - D_{10})/D_{30} \leq 0.55$$

$$0.2 \leq (D_{50} - D_{10})/D_{30} \leq 0.5$$

$$0.3 \leq (D_{50} - D_{10})/D_{30} \leq 0.48$$

$D_{50}$, $D_{70}$, and $D_{90}$ satisfy the following (2).

$$(2)\ (D_{90} - D_{50})/D_{70} \leq 0.6$$

A precursor that satisfies (2) means that, in a plurality of particles having a particle diameter larger than $D_{50}$, the variation in particle diameter between a plurality of particles is small.

In addition, the value of $(D_{90} - D_{50})/D_{70}$ is preferably 0.55 or less, more preferably 0.5 or less, and still more preferably 0.48 or less.

The lower limit value of $(D_{90} - D_{50})/D_{70}$ is, for example, 0.1 or more, 0.2 or more, or 0.3 or more.

The upper limit value and lower limit value of $(D_{90} - D_{50})/D_{70}$ can be randomly combined together.

Examples of the combinations of the upper limit value and lower limit value are shown below.

$$0.1 \leq (D_{90} - D_{50})/D_{70} \leq 0.55$$

$$0.2 \leq (D_{90} - D_{50})/D_{70} \leq 0.5$$

$$0.3 \leq (D_{90} - D_{50})/D_{70} \leq 0.48$$

A precursor that satisfies (1) and (2) means that, in the cumulative particle size distribution curve, the widths of peaks in the particle size distribution are narrow.

The precursor satisfies the following (3).

$$(3)\ 0.90 \leq [(D_{50} - D_{10})/D_{30}]/[(D_{90} - D_{50})/D_{70}] \leq 1.10$$

(3) is preferably the following (3)-1, (3)-2, or (3)-3.

$$(3)\text{-}1\ 0.95 \leq [(D_{50} - D_{10})/D_{30}]/[(D_{90} - D_{50})/D_{70}] \leq 1.09$$

$$(3)\text{-}2\ 0.96 \leq [(D_{50} - D_{10})/D_{30}]/[(D_{90} - D_{50})/D_{70}] \leq 1.08$$

$$(3)\text{-}3\ 0.97 \leq [(D_{50} - D_{10})/D_{30}]/[(D_{90} - D_{50})/D_{70}] \leq 1.07$$

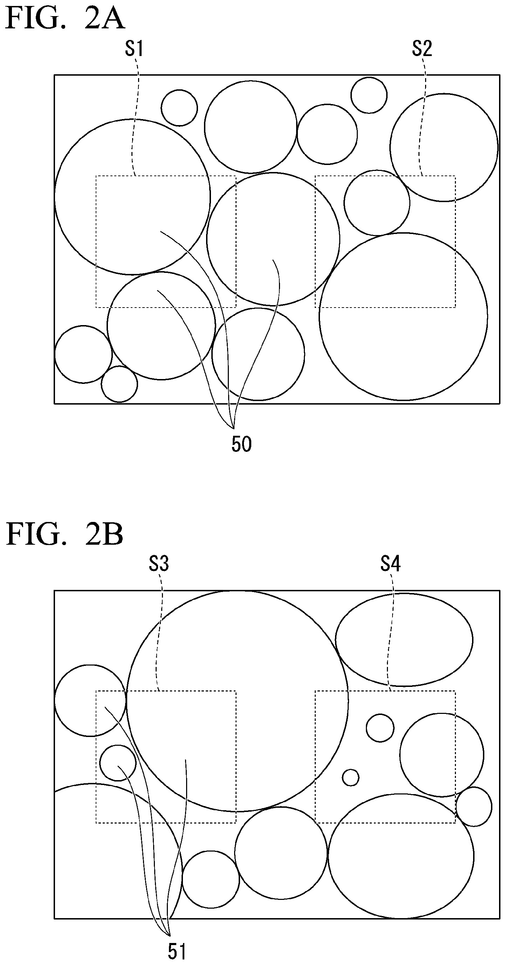

The use of CAM produced using a precursor that satisfies (1) to (3) as a raw material makes it possible to produce electrodes in which the packing density of CAM particles is more uniform. This will be described with reference to FIG. 2A and FIG. 2B.

FIG. 2A is a schematic view for describing the internal state of an electrode that is obtained from a positive electrode active material 50 produced using the precursor of the present embodiment as a raw material. In a region S1 and a region S2, the amounts of the positive electrode active material 50 present within a certain volume range are the same. That is, the abundance of the positive electrode active material 50 present in a certain volume in the electrode is uniform.

On the other hand, FIG. 2B is a schematic view for describing the internal state of an electrode that is obtained from a positive electrode active material 51 produced using a precursor that is not the present invention as a raw material. In a region S3 and a region S4, the variation in the amount of the positive electrode active material 51 present within a certain volume range becomes large. That is, the abundance of the positive electrode active material 50 present in a certain volume in the electrode is not uniform.

As shown in FIG. 2A, in a case where the abundance of CAM present in a certain volume in the electrode is uniform, in an electrode to be obtained, a voltage that is applied to the inside of the electrode at the time of charging or discharging a battery is likely to become uniform. In such an electrode, a locally strong voltage is less likely to be applied, and a gas is less likely to be generated due to the decomposition of an electrolyte solution. Therefore, it is possible to suppress battery swelling and to obtain a battery having a long life.

On the other hand, as shown in FIG. 2B, in a case where the abundance of CAM present in a certain volume in the electrode is not uniform, in an electrode to be obtained, a voltage that is applied to the inside of the electrode at the time of charging or discharging a battery is likely to vary. In such an electrode, a locally strong voltage is likely to be applied, and a gas is likely to be generated due to the decomposition of an electrolyte solution.

• Composition Formula (A)

The precursor preferably contains Ni, Co, and at least one selected from the group consisting of an element M to be described below. Examples of the precursor include compounds containing Ni and Co, compounds containing Ni and one or more metal elements selected from the group consisting of Mn and Al, compounds containing Ni, Co, and Mn, compounds containing Ni, Co, and Al, and the like. The precursor is preferably represented by the following composition formula (A). The precursor is preferably a metal composite oxide or a metal composite hydroxide.

$$Ni_{1-x-y}Co_xM_yO_z(OH)_{2-a} \ ... \quad\quad \text{Composition Formula (A)}$$

(In the composition formula (A), $0 \leq x \leq 0.45$, $0 \leq y \leq 0.45$, $0 \leq z \leq 3$, $-0.5 \leq \alpha \leq 2$, and M is one or more metal elements selected from the group consisting of Mg, Ca, Sr, Ba, Zn, B, Al, Mn, Ga, Ti, Zr, Ge, Fe, Cu, Cr, V, W, Mo, Sc, Y, Nb, La, Ta, Tc, Ru, Rh, Pd, Ag, Cd, In, and Sn.)

·· x

x is preferably 0.01 or more, more preferably 0.02 or more, and still more preferably 0.03 or more.
In addition, x is preferably 0.44 or less, more preferably 0.42 or less, and still more preferably 0.40 or less.
The upper limit value and lower limit value of x can be randomly combined together.
As an example of the combination, x preferably satisfies $0.01 \leq x \leq 0.44$, more preferably satisfies $0.02 \leq x \leq 0.42$, and still more preferably satisfies $0.03 \leq x \leq 0.40$.

·· y

y is preferably 0.01 or more, more preferably 0.02 or more, and still more preferably 0.03 or more.
In addition, y is preferably 0.44 or less, more preferably 0.42 or less, and still more preferably 0.40 or less.
The upper limit value and lower limit value of y can be randomly combined together.
In an example of the combination, y is preferably $0.01 \leq y < 0.44$, more preferably $0.02 \leq y \leq 0.42$, and still more preferably $0.03 \leq y < 0.40$.

·· z

z is preferably 0.1 or more, more preferably 0.2 or more, and still more preferably 0.3 or more.
In addition, z is preferably 2.9 or less, more preferably 2.8 or less, and still more preferably 2.7 or less.
The upper limit value and lower limit value of z can be randomly combined together.
In an example of the combination, z preferably satisfies $0.1 \leq z \leq 2.9$, more preferably satisfies $0.2 \leq z \leq 2.8$, and still more preferably satisfies $0.3 \leq z \leq 2.7$.

·· $\alpha$

$\alpha$ is preferably -0.45 or more, more preferably -0.4 or more, and still more preferably -0.35 or more.
In addition, $\alpha$ is preferably 1.8 or less, more preferably 1.6 or less, and still more preferably 1.4 or less.
The upper limit value and lower limit value of $\alpha$ can be randomly combined together.
In an example of the combination, $\alpha$ preferably satisfies $-0.45 \leq \alpha \leq 1.8$, more preferably satisfies $-0.4 \leq \alpha \leq$

1.6, and still more preferably satisfies $-0.35 \leq \alpha \leq 1.4$.

·· x + y

x + y is preferably more than 0, more preferably 0.05 or more and 0.70 or less, and still more preferably 0.10 or more and 0.50 or less.

·· M

In the composition formula (A), M is preferably one or more metal elements selected from the group consisting of Zr, Al, and Mn.

[Composition analysis]

The composition analysis of the precursor can be measured using an ICP emission spectrometer after dissolving the precursor powder in hydrochloric acid.
As the ICP emission spectrometer, for example, Optima 7300 manufactured by Perkin Elmer Inc. can be used.
In the precursor, the value of $D_{50}$ is preferably less than 10 $\mu$m, more preferably 9 $\mu$m or less, and still more preferably 8 $\mu$m or less. The value of $D_{50}$ is preferably more than 1 $\mu$m, more preferably 2 $\mu$m or more, still more preferably 2.0 $\mu$m or more, and far still more preferably 3 $\mu$m or more.
When $D_{50}$ of the precursor is less than the above-described upper limit value, a lithium compound and the precursor react uniformly in a subsequent calcining step, and CAM having the same particle size distribution as the precursor is likely to be obtained. The use of such CAM makes it easy to obtain a lithium secondary battery in which battery swelling is further suppressed.
The upper limit value and lower limit value of $D_{50}$ can be randomly combined together.
Examples of the combinations of the upper limit value and lower limit value are shown below.

$$1 \ \mu m < D_{50} < 10 \ \mu m$$

$$2 \ \mu m \leq D_{50} \leq 9 \ \mu m$$

$$3 \ \mu m \leq D_{50} \leq 8 \ \mu m$$

<Method for producing precursor>

A method for producing the precursor of the present embodiment will be described.
A step of producing the precursor includes a slurry preparation step of supplying a metal-containing aqueous solution containing at least a nickel atom and an alkaline aqueous solution to a reaction tank to obtain a hydroxide-containing slurry and a classification step of classifying the hydroxide-containing slurry using a liquid cyclone type classifier.
The method for producing the precursor preferably includes a slurry preparation step, a classification step, and an optional reflux step in this order. Hereinafter, each step will be described.

[Slurry preparation step]

The slurry preparation step is a step of supplying a metal-containing aqueous solution containing at least a nickel atom and an alkaline aqueous solution to a reaction tank to obtain a hydroxide-containing slurry.
In the present step, a metal-containing aqueous solution containing at least a nickel atom and an alkaline aqueous solution are continuously supplied to a reaction tank and reacted together while being stirred to obtain a hydroxide-containing slurry.
At this time, an aqueous solution containing an ammonium ion feeder may be supplied.
Hereinafter, the present step will be described using, as the hydroxide-containing slurry, a slurry containing a metal composite hydroxide containing Ni, Co, and Al (referred to as the nickel cobalt aluminum metal composite hydroxide in some cases) as an example.
First, a nickel salt solution, a cobalt salt solution, an aluminum salt solution, and a complexing agent are reacted with one another by a coprecipitation method, particularly, a continuous coprecipitation method described in JP-A-2002-201028, thereby producing a metal composite hydroxide represented by $Ni_{1-x-y}Co_xAl_y(OH)_2$.

A nickel salt, which is the solute of the nickel salt solution, is not particularly limited, and, for example, any one or more of nickel sulfate, nickel nitrate, nickel chloride, and nickel acetate can be used.

As a cobalt salt that is a solute of the cobalt salt solution, for example, any one or more of cobalt sulfate, cobalt nitrate, cobalt chloride, and cobalt acetate can be used.

As an aluminum salt that is a solute of the aluminum salt solution, for example, aluminum sulfate, sodium aluminate, or the like can be used.

In the case of preparing a slurry containing a metal composite hydroxide containing manganese as the hydroxide-containing slurry, a manganese salt solution is used. In this case, as a manganese salt that is a solute of the manganese salt solution, for example, any one or more of manganese sulfate, manganese nitrate, manganese chloride, and manganese acetate can be used.

The above-described metal salts are used in a fraction corresponding to the composition ratio of $Ni_{1-x-y}Co_xAl_y(OH)_2$. That is, the individual metal salts are used in amounts in which the mole ratio among the nickel atom in the solute of the nickel salt solution, the cobalt atom in the solute of the cobalt salt solution, and the aluminum atom in the solute of the aluminum salt solution corresponds to the composition ratio of $Ni_{1-x-y}Co_xAl_y(OH)_2$ and becomes 1-x-y:x:y.

In addition, the solvents of the nickel salt solution, the cobalt salt solution, and the aluminum salt solution are preferably water.

The complexing agent is a compound capable of form a complex with a nickel ion, a cobalt ion, and an aluminum ion in an aqueous solution. Examples of the complexing agent include an ammonium ion feeder, hydrazine, ethylenediaminetetraacetic acid, nitrilotriacetic acid, uracil diacetic acid, and glycine.

As the ammonium ion feeder, for example, ammonium salts such as ammonium hydroxide, ammonium sulfate, ammonium chloride, ammonium carbonate and ammonium fluoride can be used.

In a case where the complexing agent is used in the slurry adjustment step, the amount of the complexing agent contained in the liquid mixture containing the nickel salt solution, the cobalt salt solution, the aluminum salt solution, and the complexing agent is, for example, more than 0 and 2.0 or less in terms of the molar ratio to the sum of the numbers of moles of the metal salts.

In the coprecipitation method, in order to adjust the pH value of the liquid mixture containing the nickel salt solution, the manganese salt solution, the cobalt salt solution, the aluminum salt solution, and the complexing agent, an alkaline aqueous solution is added to the liquid mixture before the pH of the liquid mixture turns from alkaline into neutral. As the alkaline aqueous solution, sodium hydroxide or potassium hydroxide can be used.

The value of the pH in the present specification is defined as a value measured when the temperature of the liquid mixture is 40°C. The pH of the liquid mixture is measured when the temperature of the liquid mixture sampled from the reaction tank reaches 40°C.

In a case where the temperature of the sampled liquid mixture is lower than 40°C, the pH is measured when the liquid mixture has been heated to reach 40°C.

In a case where the temperature of the sampled liquid mixture is higher than 40°C, the pH is measured when the liquid mixture has been cooled to reach 40°C.

At the time of the reaction, the temperature of the reaction tank is controlled in a range of, for example, 20°C or higher and 80°C or lower and preferably 30°C or higher and 70°C or lower.

In addition, at the time of the reaction, the pH value in the reaction tank is controlled in a range of, for example, pH 9 or higher and pH 13 or lower and preferably pH 11 or higher and pH 13 or lower.

The substances in the reaction tank are appropriately stirred and mixed together.

As the reaction tank that is used in the continuous coprecipitation method, it is possible to use a reaction tank in which the formed metal composite hydroxide is caused to overflow for separation.

The inside of the reaction tank may be an inert atmosphere. In the inert atmosphere, it is possible to suppress the aggregation of elements that are more easily oxidized than nickel and to obtain a uniform metal composite hydroxide.

In addition, the inside of the reaction tank may be in an oxygen-containing atmosphere or in the presence of an oxidizing agent.

As long as the oxygen-containing atmosphere has an appropriate amount of an oxygen atom, an inert atmosphere can be held in the reaction tank. In a case where the atmosphere in the reaction tank is controlled with a gas species, a predetermined gas species may be passed into the reaction tank or a reaction solution may be directly bubbled.

As the oxidizing agent, it is possible to use a peroxide such as hydrogen peroxide, a peroxide salt such as permanganate, perchloric acid, hypochlorite, nitric acid, halogen, ozone, or the like.

In addition, in order to accelerate the crystal growth of the precursor while enhancing the uniformity in the reaction tank, the solution is preferably stirred with a stirring blade installed in the reaction tank. The adjustment of the rotation speed of the stirring blade makes it possible to control the physical properties of the precursor. While the stirring speed also depends on the size of the reaction tank, as an example, the rotation speed of the stirring blade is preferably 300 rpm or faster and 2000 rpm or slower.

The above-described step makes a slurry containing a nickel cobalt aluminum metal composite hydroxide as the hydroxide-containing slurry obtained.

[Classification step]

In the present step, the hydroxide-containing slurry that is obtained in the slurry preparation step is classified using a liquid cyclone type classifier.

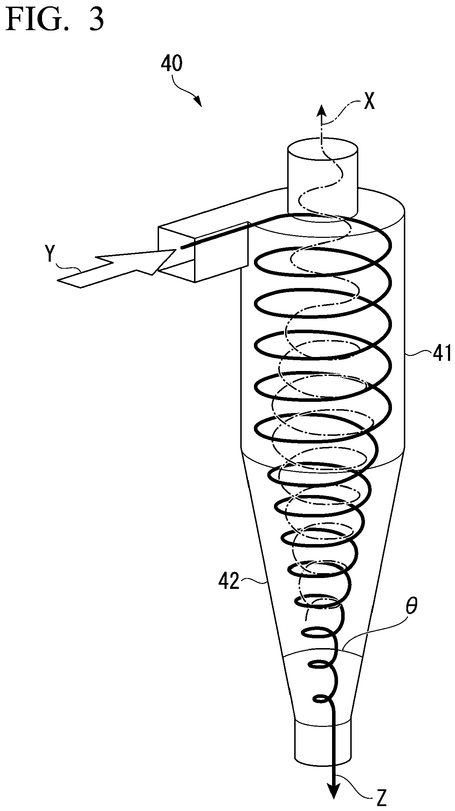

The hydroxide-containing slurry is continuously drawn out from the reaction tank, stored in a slurry storage tank, and classified with the liquid cyclone type classifier. Specifically, in a liquid cyclone type classifier 40 of FIG. 3, among particles that are contained in the hydroxide-containing slurry sent in a direction indicated by a symbol Y, a hydroxide-containing slurry A containing particles having a target particle diameter passes through a tapered portion 42 and is discharged from the lower portion of the liquid cyclone type classifier 40.

A hydroxide-containing slurry B containing particles other than the hydroxide-containing slurry A is discharged from the upper portion of the liquid cyclone type classifier 40 along a direction indicated by a symbol X. The hydroxide-containing slurry A is recovered with the liquid cyclone type classifier, and the hydroxide-containing slurry B is continuously refluxed to the reaction tank in a subsequent reflux step.

FIG. 3 shows a schematic view of the liquid cyclone type classifier 40. The liquid cyclone type classifier 40 includes a cylindrical portion 41 and the tapered portion 42.

First, the hydroxide-containing slurry is sent from the direction indicated by the symbol Y in FIG. 3, and the hydroxide-containing slurry is introduced into the liquid cyclone type classifier. After that, a rotational motion is caused to exert a centrifugal force on the hydroxide-containing slurry, and the particles that are contained in the hydroxide-containing slurry are classified according to the particle diameters.

Due to the centrifugal force, particles having a small particle diameter gather at the central portion of the vortex, ride on an upward flow (an arrow indicated by a dashed line in FIG. 3) that is generated at the central portion, and are discharged in the direction indicated by the symbol X.

Particles having a large particle diameter gather on the outer side of the vortex, ride on a downward flow (an arrow indicated by a solid line in FIG. 3) that is generated at the outer wall portion, and are discharged in a direction indicated by a symbol Z.

The taper angle $\theta$ of the tapered portion 42 of the liquid cyclone type classifier 40 is preferably 10° or more and 60° or less.

In a case where the taper angle $\theta$ of the tapered portion 42 is the above-described lower limit value or more, a sufficient centrifugal force is applied to the particles that are contained in the hydroxide-containing slurry, the classification efficiency is likely to increase, and a precursor satisfying the (1) to (3) is likely to be obtained.

Specifically, when the taper angle $\theta$ of the liquid cyclone type classifier is increased, the value of $(D_{50} - D_{10})/D_{30}$ is likely to decrease, the value of $(D_{90} - D_{50})/D_{70}$ is likely to decrease, and the value of $[(D_{50} - D_{10})/D_{30}]/[(D_{50} - D_{10})/D_{30}]$ is likely to become close to 1.

When the taper angle $\theta$ of the tapered portion 42 is the above-described upper limit value or less, the amount of particles discharged from the tapered portion 42 can be maintained high. Therefore, the number of particles that are contained in the hydroxide-containing slurry thrown into the liquid cyclone type classifier 40 is less likely to increase, and it is possible to increase the production efficiency while maintaining a high classification efficiency.

It is preferable that the slurry sending flow rate of the liquid cyclone type classifier is set to 0.6 m/sec or faster and 1.5 m/sec or slower. The slurry sending flow rate refers to the value of the flow rate actually measured when the slurry is sent from the direction indicated by the symbol Y

In a case where the slurry sending flow rate of the liquid cyclone type classifier is the above-described lower limit value or faster, a sufficient centrifugal force is applied to the particles that are contained in the hydroxide-containing slurry, the classification efficiency is likely to increase, and a precursor satisfying the (1) to (3) is likely to be obtained.

Specifically, when the slurry sending flow rate of the liquid cyclone type classifier is increased, the value of $(D_{50} - D_{10})/D_{30}$ is likely to decrease, the value of $(D_{90} - D_{50})/D_{70}$ is likely to decrease, and the value of $[(D_{50} - D_{10})/D_{30}]/[(D_{50} - D_{10})/D_{30}]$ is likely to become close to 1.

In addition, a large number of particles are discharged from the tapered portion 42, and the production efficiency of the precursor can be increased.

In a case where the slurry sending flow rate of the liquid cyclone type classifier is the above-described upper limit or slower, an excessively strong centrifugal force is less likely to be applied to the particles that are contained in the hydroxide-containing slurry, and particles having small particle diameters, which are not the target, are less likely to be discharged from the tapered portion 42, and thus the classification efficiency is likely to increase, and a precursor satisfying the (1) to (3) is likely to be obtained.

When the classification step is carried out and, furthermore, the taper angle $\theta$ and the slurry sending flow rate are set within the above-described ranges, it is possible to obtain a precursor satisfying the (1) to (3).

[Reflux step]

The reflux step is a step of returning (refluxing) the hydroxide-containing slurry B classified with the liquid cyclone type classifier in the classification step to the inside of the reaction tank. The reflux method is not particularly limited, and well-known means can be used. For example, in a case where the classified hydroxide-containing slurry B is directly returned to the reaction tank, the slurry may be returned to the reaction tank with a pump.

When the classification step, the reflux step, and the particle growth in the reaction tank are repeated, it is possible to continuously grow the particles that are contained in the hydroxide-containing slurry B until the particles reach the target particle diameter, and a precursor satisfying the (1) to (3) is likely to be obtained.

The reflux speed, that is, the speed of the hydroxide-containing slurry B returning to the reaction tank may be adjusted depending on the supply speed of the metal-containing aqueous solution, the aqueous solution containing an ammonium ion feeder, or the like.

[Dehydration step]

After the above-described reaction, the obtained hydroxide-containing slurry is washed and then dried, and a nickel cobalt aluminum metal composite hydroxide is obtained as a precursor.

At the time of isolating the precursor, a method in which the hydroxide-containing slurry is dehydrated by centrifugation, suction filtration, or the like is preferable.

The precursor obtained by dehydration is preferably washed with water or a washing liquid containing an alkali. In the present embodiment, the co-precipitate is preferably washed with a washing liquid containing an alkali and more preferably washed with a sodium hydroxide solution.

[Drying step]

The precursor obtained by the dehydration step is dried in the atmospheric atmosphere under a condition of 105°C or higher and 200°C or lower for 1 hour or longer and 20 hours or shorter.

In the above-described example, the metal composite hydroxide is produced as the precursor, but a metal composite oxide may also be prepared.

[Optional heating step]

In the case of producing a metal composite oxide as a precursor, it is preferable to have a step of heating the obtained metal composite hydroxide in a temperature range of 300°C or higher and 900°C or lower in an oxygen-containing atmosphere. When the metal composite hydroxide is heated in the above-described temperature range, the metal composite hydroxide is oxidized, and a metal composite oxide can be obtained. The heating step is preferably carried out for 1 hour or longer and 20 hours or shorter.

The heating temperature in the heating step is preferably 350°C or higher and 800°C or lower and more preferably 400°C or higher and 700°C or lower. When the heating temperature is the above-described lower limit value or lower, it is possible to decrease the amount of the metal composite hydroxide that may remain in a precursor to be obtained. When the heating temperature is the above-described upper limit value or lower, it is possible to suppress calcining between the precursor particles and to obtain a precursor where the particle size distribution satisfies (3).

<Method for producing CAM>

A method for producing CAM has a mixing step of mixing the precursor obtained by the method for producing a precursor and a lithium compound to obtain a mixture and a calcining step of calcining the obtained mixture.

[Mixing step]

In the present step, the precursor and a lithium compound are mixed to obtain a mixture.

• Lithium compound

As the lithium compound, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

The method for mixing the precursor and the lithium compound will be described.

The precursor and the lithium compound are mixed in consideration of the composition ratio of a final target product. For example, in a case where a nickel cobalt aluminum metal composite hydroxide is used, the lithium compound and the metal composite hydroxide are used at fractions corresponding to the composition ratio of a lithium nickel cobalt aluminum composite oxide represented by $LiNi_{1-x-y}Co_xAl_yO_2$.

In addition, in the case of producing a lithium metal composite oxide excessively containing lithium (the mole ratio of Li contained is more than 1), the lithium compound and the metal composite hydroxide are mixed at fractions at which the mole ratio between Li that is contained in the lithium compound and the metal element that is contained in the metal composite hydroxide becomes a ratio of more than 1.

[Calcining step]

The mixture of the nickel cobalt aluminum metal composite hydroxide and the lithium compound is calcined, whereby a lithium nickel cobalt aluminum composite oxide is obtained. In the calcining, a dry air, an oxygen atmosphere, an inert atmosphere, or the like is used depending on a desired composition, and a plurality of heating steps is carried out as necessary.

The mixture may be calcined in the presence of an inert melting agent. Calcining in the presence of an inert melting agent makes it possible to accelerate the reaction of the mixture. The inert melting agent may remain in the calcined positive electrode active material or may be removed by being washed with water or an alcohol after the calcining. In addition, calcined CAM is preferably washed with water or an alcohol.

The particle diameters of CAM to be obtained can be controlled by adjusting the holding temperature in the calcining.

The calcining step may be only one time of calcining or may have a plurality of calcining stages.

In a case where the calcining step has a plurality of calcining stages, a step in which the mixture is calcined at the highest temperature is referred to as the main calcining. Prior to the main calcining, a preliminary calcining in which the mixture is calcined at a lower temperature than in the main calcining may be carried out. In addition, after the main calcining, a post calcining in which the mixture is calcined at a lower temperature than in the main calcining may be carried out.

The calcining temperature (highest holding temperature) in the main calcining is preferably 600°C or higher, more preferably 700°C or higher, and particularly preferably 800°C or higher from the viewpoint of accelerating the growth of the CAM particles. From the viewpoint of suppressing cracks occurring in the CAM particles and maintaining the strength of the CAM particles, the temperature is preferably 1200°C or lower, more preferably 1100°C or lower, and particularly preferably 1000°C or lower.

The upper limit value and lower limit value of the highest holding temperature in the main calcining can be randomly combined together.

As the combination, 600°C or higher and 1200°C or lower, 700°C or higher and 1100°C or lower, and 800°C or higher and 1000°C or lower are exemplary examples.

The calcining temperature in the preliminary calcining or the post calcining may be lower than the calcining temperature in the main calcining, and, for example, a range of 350°C or higher and 700°C or lower is an exemplary example.

The holding temperature in the calcining may be appropriately adjusted depending on the kind of a transition metal element used and the kinds and amounts of a precipitant and the inert melting agent.

In the present embodiment, the holding temperature may be set in consideration of the melting point of the inert melting agent, which will be described below and is preferably set in a range of [melting point of inert melting agent - 200°C] or higher and

[melting point of inert melting agent + 200°C] or lower.

In addition, as the time during which the mixture is held at the holding temperature, 0.1 hour or longer and 20 hours or shorter is an exemplary example, and 0.5 hours or longer and 10 hours or shorter is preferable. The temperature rising rate up to the holding temperature is usually 50 °C/hour or faster and 400 °C/hour or slower, and the temperature lowering rate from the holding temperature to room temperature is usually 10 °C/hour or faster and 400 °C/hour or slower. In addition, as the atmosphere for the calcining, it is possible to use the atmosphere, oxygen, nitrogen, argon or a gas mixture thereof.

After the calcining step, the mixture is appropriately pulverized and sieved to obtain a positive electrode active material.

The inert melting agent that can be used in the present embodiment is not particularly limited as long as the inert melting agent does not easily react with the mixture during the calcining. In the present embodiment, at least one selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate is an exemplary example. As specific compounds, inert melting agents described in JP6734491B are exemplary examples.

The abundance of the inert melting agent during the calcining may be appropriately selected. As an example, the abundance of the inert melting agent during the calcining is preferably 0.1 parts by mass or more and more preferably 1 part by mass or more with respect to 100 parts by mass of the lithium compound. In addition, in a case where there is a need to further accelerate the growth of the crystals, an inert melting agent other than the inert melting agents exemplified above may be jointly used. As the inert melting agent that is used in this case, ammonium salts such as $NH_4Cl$ and $NH_4F$ are exemplary examples.

<Lithium secondary battery positive electrode active material>

CAM is obtained by the <Method for producing CAM> using the above-described precursor as a raw material. The use of CAM makes it easy to obtain a lithium secondary battery in which battery swelling is further suppressed.

In addition, in CAM, the value of $D_{50}$ is likely to become less than 10 $\mu$m.

<Lithium secondary battery>

Next, a positive electrode in which CAM that is produced by the above-described method is used and a lithium secondary battery having this positive electrode will be described while describing the configuration of the lithium secondary battery.

CAM that is used at the time of producing the positive electrode is preferably composed of CAM of the present embodiment, but CAM that is different from CAM of the present embodiment may be contained to an extent that the effect of the present invention is not impaired.

An example of the lithium secondary battery has a positive electrode, a negative electrode, a separator interposed between the positive electrode and the negative electrode, and an electrolyte solution disposed between the positive electrode and the negative electrode.

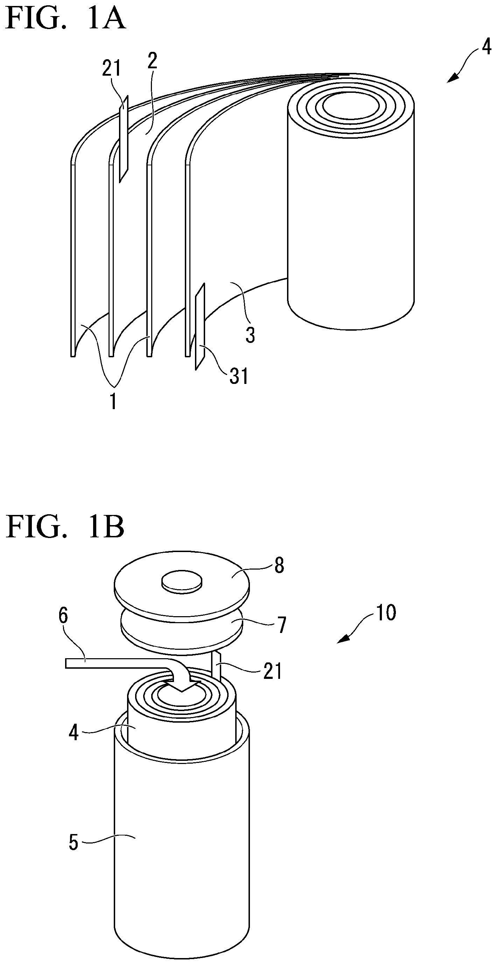

FIG. 1A and FIG. 1B are schematic views showing an example of the lithium secondary battery. A cylindrical lithium secondary battery 10 is produced as described below.

First, as shown in FIG. 1A, a pair of separators 1 having a strip shape, a strip-shaped positive electrode 2 having a positive electrode lead 21 at one end, and a strip-shaped negative electrode 3 having a negative electrode lead 31 at one end are laminated in the order of the separator 1, the positive electrode 2, the separator 1, and the negative electrode 3 and are wound to form an electrode group 4.

Next, as shown in FIG. 1B, the electrode group 4 and an insulator (not shown) are accommodated in a battery can 5, then, the can bottom is sealed, the electrode group 4 is impregnated with an electrolyte solution 6, and an electrolyte is disposed between the positive electrode 2 and the negative electrode 3. Furthermore, the upper portion of the battery can 5 is sealed with a top insulator 7 and a sealing body 8, which makes it possible to produce a lithium secondary battery 10.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the lamination-type lithium secondary battery, it is possible to exemplify a so-called coin-type battery, a button-type battery, and a paper-type (or sheet-type) battery.

Hereinafter, each configuration will be described in order.

(Positive electrode)

The positive electrode can be produced by, first, preparing a positive electrode mixture containing CAM, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples.

The fraction of the conductive material in the positive electrode mixture is preferably 5 parts by mass or more and 20 parts by mass or less with respect to 100 parts by mass of CAM. In the case of using a fibrous carbon material such as a graphitized carbon fiber or a carbon nanotube as the conductive material, it is also possible to decrease the fraction.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene; and the resins described in WO 2019/098384A1 or US2020/0274158A1 can be exemplary examples.

Two or more of these thermoplastic resins may be used in a mixture form. When a fluororesin and a polyolefin resin are used as the binder, the fraction of the fluororesin in the entire positive electrode mixture is set to 1 mass% or more and 10 mass% or less, and the fraction of the polyolefin resin is set to 0.1 mass% or more and 2 mass% or less, it is possible to obtain a positive electrode mixture having both a high adhesive force to the positive electrode current collector and a high bonding force in the positive electrode mixture.

(Positive electrode current collector)

As the positive electrode current collector in the positive electrode, a strip-shaped member formed of a metal material such as Al, Ni, or stainless steel as a forming material can be used. Particularly, a positive electrode current collector that is formed of Al and has a thin film shape is preferable since the positive electrode current collector is easy to process and inexpensive.

As the method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and can be doped with lithium ions and from which lithium ions can be de-doped at a lower potential than the positive electrode are exemplary examples.

As the carbon material that can be used as the negative electrode active material, graphite such as natural graphite and artificial graphite, cokes, carbon black, pyrolytic carbons, carbon fibers, and calcined products of an organic polymer compound are exemplary examples.

As oxides that can be used as the negative electrode active material, oxides of silicon represented by a formula $SiO_x$ (here, x is a positive real number) such as $SiO_2$ and $SiO$; oxides of tin represented by a formula $SnO_x$ (here, x is a positive real number) such as $SnO_2$ and $SnO$; and composite metal oxides containing lithium and titanium or vanadium such as $Li_4Ti_5O_{12}$ and $LiVO_2$ can be exemplary examples.

In addition, as the metal that can be used as the negative electrode active material, lithium metal, silicon metal, tin metal, and the like can be exemplary examples. As a material that can be used as the negative electrode active material, the materials described in WO 2019/098384A1 or US2020/0274158A1 may be used.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu and has a thin film shape is preferable since the negative electrode current collector does not easily produce an alloy with lithium and is easy to process.

As the method for supporting the negative electrode mixture by the negative electrode current collector, similarly to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

The air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolyte solution)

The electrolyte solution in the lithium secondary battery contains an electrolyte and an organic solvent.

As the electrolyte that is contained in the electrolyte solution, lithium salts such as $LiClO_4$ and $LiPF_6$ are exemplary examples, and a mixture of two or more thereof may be used. In addition, the electrolytes described in WO 2019/098384A1 or US2020/0274158A1 may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent that is contained in the electrolyte solution, for example, propylene carbonate, ethylene carbonate, dimethyl carbonate, diethyl carbonate, ethyl methyl carbonate, and the organic solvents described in WO 2019/098384A1 or US2020/0274158A1 can be used.

As the organic solvent, two or more of these are preferably mixed and used, and a solvent mixture of a cyclic carbonate and a non-cyclic carbonate and a solvent mixture of a cyclic carbonate and ethers are more preferable. As the solvent mixture of a cyclic carbonate and a non-cyclic carbonate, a solvent mixture containing ethylene carbonate, dimethyl carbonate, and ethyl methyl carbonate is preferable.

In addition, as the electrolyte solution, it is preferable to use an electrolyte solution containing a lithium salt containing fluorine such as $LiPF_6$ and an organic solvent having a fluorine substituent since the safety of lithium secondary batteries to be obtained is enhanced.

In addition, since positive electrodes having the above-described configuration have CAM having the above-described configuration, it is possible to suppress the amount of battery swelling of lithium secondary batteries.

<All-solid-state lithium-ion secondary battery>

Next, a positive electrode for which a lithium secondary battery positive electrode active material that is produced by the present embodiment is used and an all-solid-state lithium-ion secondary battery having this positive electrode will be described while describing the configuration of the all-solid-state lithium-ion secondary battery.

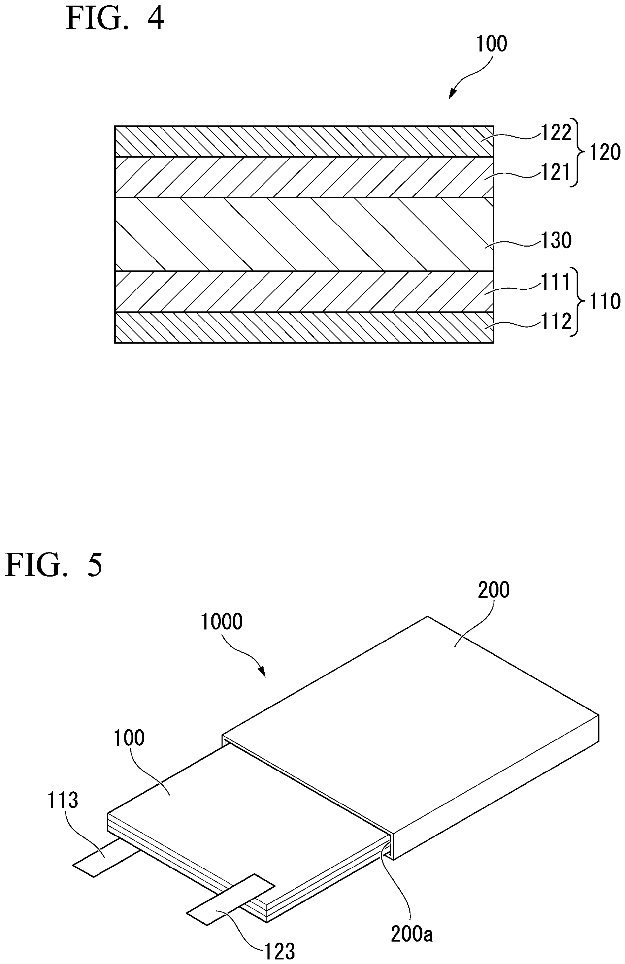

FIGS. 4 and 5 are schematic views showing an example of the all-solid-state lithium-ion secondary battery. FIG. 4 is a schematic view showing a laminate that the all-solid-state lithium-ion secondary battery includes. FIG. 5 is a schematic view showing an entire configuration of the all-solid-state lithium-ion secondary battery.

An all-solid-state lithium-ion secondary battery 1000 has a laminate 100 having a positive electrode 110, a negative electrode 120, and a solid electrolyte layer 130 and an exterior body 200 accommodating the laminate 100. In addition, the all-solid-state lithium secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples.

A material that configures each member will be described below.

The laminate 100 may have an external terminal 113 that is connected to a positive electrode current collector 112 and an external terminal 123 that is connected to a negative electrode current collector 122.

In the laminate 100, the positive electrode 110 and the negative electrode 120 interpose the solid electrolyte layer 130 so as not to short-circuit each other. In addition, the all-solid-state lithium-ion secondary battery 1000 may have a separator, which has been used in conventional liquid-based lithium ion secondary batteries, between the positive electrode 110 and the negative electrode 120 to prevent a short circuit between the positive electrode 110 and the negative electrode 120.

The all-solid-state lithium-ion secondary battery 1000 has an insulator, not shown, that insulates the laminate 100 and the exterior body 200 from each other or a sealant, not shown, that seals an opening portion 200a of the exterior body 200.

As the exterior body 200, a container formed of a highly corrosion-resistant metal material such as aluminum, stainless steel or nickel-plated steel can be used. In addition, a container obtained by processing a laminate film having at least one surface on which a corrosion resistant process has been carried out into a bag shape can also be used.

As the shape of the all-solid-state lithium-ion secondary battery 1000, for example, shapes such as a coin type, a button type, a paper type (or a sheet type), a cylindrical type, and a square type can be exemplary examples.

The all-solid-state lithium-ion secondary battery 1000 is shown in the drawings to have one laminate 100 but is not limited thereto. The all-solid-state lithium-ion secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains the lithium secondary battery positive electrode active material, which is one aspect of the present invention described above. In addition, the positive electrode active material layer 111 may contain a solid electrolyte, a conductive material, and a binder.

(Solid electrolyte)

As the solid electrolyte that the positive electrode active material layer 111 may have, a solid electrolyte that has lithium ion conductivity and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

In the present embodiment, an oxide-based solid electrolyte or a sulfide-based solid electrolyte is preferably used, and an oxide-based solid electrolyte is more preferably used.

(Oxide-based solid electrolyte)

As the oxide-based solid electrolyte, for example, a perovskite-type oxides, a NASICON-type oxide, a LISICON-type oxide, a garnet-type oxides, and the like are exemplary examples. Specific examples of each oxide include the compounds described in WO 2020/208872A1, US2016/0233510A1, and US2020/0259213A1.

As the garnet-type oxide, Li-La-Zr-based oxides such as $Li_7La_3Zr_2O_{12}$ (LLZ) are exemplary examples.

The oxide-based solid electrolyte may be a crystalline material or an amorphous (amorphous) material. As the amorphous (amorphous) solid electrolyte, for example, Li-B-O compounds such as $Li_3BO_3$, $Li_2B_4O_7$, and $LiBO_2$ are exemplary examples. The oxide-based solid electrolyte preferably contains an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, $Li_{10}GeP_2S_{12}$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes containing $Li_2S$ and $P_2S_5$ and further containing a different raw material. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$LiI$-$LiBr$, and the like can be exemplary examples.

As the $Li_2S$-$SiS_2$-based compounds, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$P_2S_5$-$LiCl$, and the like are exemplary examples.

As the $Li_2S$-$GeS_2$-based compounds, $Li_2S$-$GeS_2$, $Li_2S$-$GeS_2$-$P_2S_5$, and the like are exemplary examples.

The sulfide-based solid electrolyte may be a crystalline material or an amorphous (amorphous) material. The sulfide-based solid electrolyte preferably contains an amorphous material.

Two or more solid electrolytes can be jointly used as long as the effect of the invention is not impaired.

(Conductive material and binder)

As the conductive material that the positive electrode active material layer 111 may have, the materials described in the above-described (conductive material) can be used. In addition, as for the fraction of the conductive material in the positive electrode mixture, the fractions described in the above-described (conductive material) can be applied in the same manner. In addition, as the binder that the positive electrode may have, the materials described in the above-described (binder) can be used.

(Positive electrode current collector)

As the positive electrode current collector 112 that the positive electrode 110 has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface side of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface side of the positive electrode current collector 112, and calcining the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-like mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method in an aspect that the negative electrode electrolyte layer 121 comes into contact with the surface of the solid electrolyte layer 130. Therefore, the solid electrolyte layer 130 comes into contact with and becomes electrically connected with the negative electrode active material layer 121.

As described above, in the obtained all-solid-state lithium-ion secondary battery 100, the solid electrolyte layer 130 is provided in contact with the positive electrode 110 and the negative electrode 120 such that the positive electrode 110 and the negative electrode 120 do not short-circuit. The provided all-solid-state lithium-ion battery 100 is connected to an external power source and charged by applying a negative potential to the positive electrode 110 and applying a positive potential to the negative electrode 120.

Furthermore, the charged all-solid-state lithium-ion secondary battery 100 is discharged by connecting a discharge circuit to the positive electrode 110 and the negative electrode 120 and energizing the discharge circuit.

Since positive electrodes having the above-described configuration have CAM having the above-described configuration, it is possible to suppress the amount of battery swelling of all-solid-state lithium-ion secondary batteries.

[Examples]

Next, the present invention will be described in more detail using examples.

<Composition analysis>

The composition analysis of a precursor to be produced by a method described below was carried out by the method described in the above-described [Composition analysis] .

<Measurement of particle size distribution>

The cumulative volume particle size distribution of the precursor was measured by the method described in the [Measurement of particle size distribution] section. Detailed measurement conditions are shown in Table 1 below. The values of $(D_{50} - D_{10})/D_{30}$, $(D_{90} - D_{50})/D_{70}$, and $[(D_{50} - D_{10})/D_{30}]/[(D_{90} - D_{50})/D_{70}]$ were each calculated using the

obtained values of $D_{10}$, $D_{30}$, $D_{50}$, $D_{70}$, and $D_{90}$.

[Table 1]

| Condition | |
|---|---|
| Dispersant | 20 mass% sodium hexametaphosphate 1 mL |
| Dispersion medium | Ion exchange water 199 mL |
| Transmittance | $85 \pm 3\%$ |
| Specimen refractive index | 2.13 - 0.25i |
| Solvent refractive index | 1.333 |
| Circulation rate | 2 |
| Stirring speed | 3 |
| Ultrasonic wave intensity | 1 |
| Ultrasonic wave time | 1 minute |

<Production of positive electrode>

A paste-like positive electrode mixture was prepared by adding and kneading CAM that was obtained by a production method to be described below, a conductive material (acetylene black), and a binder (PVdF) in fractions at which a composition of CAM:conductive material:binder = 92:5:3 (mass ratio) was achieved. At the time of preparing the positive electrode mixture, NMP was used as an organic solvent.
The obtained positive electrode mixture was applied to an Al foil having a thickness of 40 $\mu$m, which was to serve as a current collector, and dried in a vacuum at 150°C for 8 hours, thereby obtaining a positive electrode.

<Production of negative electrode>

Next, a paste-like negative electrode mixture was prepared by adding and kneading artificial graphite (MAGD manufactured by Nihon Kasei Co., Ltd.) as a negative electrode active material, CMC (manufactured by DKS Co. Ltd.) and SBR (manufactured by Nippon A & L Inc.) as binders in fractions at which a composition of negative electrode active material:CMC:SBR = 98:1:1 (mass ratio) was achieved. At the time of preparing the negative electrode mixture, ion exchange water was used as a solvent.
The obtained negative electrode mixture was applied to a Cu foil having a thickness of 12 $\mu$m, which was to serve as a current collector, and dried in a vacuum at 60°C for 8 hours, thereby obtaining a negative electrode.

<Production of lithium secondary battery (laminate cell)>

The positive electrode produced in the <Production of positive electrode> section was placed on an aluminum laminate film with the aluminum foil surface facing downward, and a laminated film separator (polyethylene porous film (thickness: 27 $\mu$m)) was placed thereon.
Next, the negative electrode produced in the <Production of negative electrode> section was placed on the upper side of the laminated film separator with the copper foil surface facing upward, and an aluminum laminate film was placed thereon. Furthermore, the laminate was heat-sealed except a portion for injecting an electrolyte solution.
After that, the laminate was transferred into a dry bench in a dry atmosphere at the dew point temperature -50°C or lower, and 1 mL of the electrolyte solution was injected using a vacuum injector. As the electrolyte solution, an electrolyte solution obtained by adding 1 vol% of vinylene carbonate to a liquid mixture of ethylene carbonate, dimethyl carbonate, and ethyl methyl carbonate in a volume ratio of 16:10:74 and dissolving LiPF$_6$ in the mixture at a fraction of 1.3 mol/l.
Finally, the electrolyte solution injection portion was heat-sealed to produce a laminate cell.

[Measurement of amount of battery swelling]

The amount of battery swelling was measured by the following method.
First, after the formation of the laminate cell produced as described above, the volume of the laminate cell discharged to 2.5 V at a current value of 0.2 CA was measured by the Archimedes method, and the volume before storage was measured.

After that, the laminate cell was charged up to 4.3 V and stored in a constant temperature bath at 60°C for 7 days.

After the storage, the volume of the laminate cell discharged to 2.5 V at a current value of 0.2 CA was measured by the Archimedes method, and the volume after the storage was measured.

The volume difference ($cm^3$) before and after the storage was divided by the amount (g) of the positive electrode material present in the laminate cell, and the value was regarded as the amount of battery swelling per positive electrode material ($cm^3/g$).

The Archimedes method is a method in which the actual volume of the entire laminate cell is measured from the difference between the weight of the laminate cell in an air and the weight in water using an automatic hydrometer.

The formation of the laminate cell was carried out under the following conditions.

Formation conditions: The laminate cell was charged up to a SOC of 10% at 0.1 CA at a testing temperature of 25°C, left to stand at a testing temperature of 60°C for 10 hours, and then CC-CV-charged up to 4.3 V at 0.1 CA at a testing temperature of 25°C until the current reached 0.05 CA. Furthermore, the laminate cell was discharged up to 2.5 V at 0.2 CA and charged and discharged at 0.2 CAtwo cycles.

(Example 1)

• Slurry adjustment step

Water was put into a 500 L cylindrical reaction tank equipped with a stirrer equipped with a 220 φ propeller type stirring blade and an overflow pipe, then, a 32 mass% sodium hydroxide solution was added until the pH reached 12.4 (value measured when the temperature of the solution was 40°C), and the temperature was held at 40°C with a heater. Next, nitrogen gas was continuously blown into the reaction tank at a flow rate of 5 L/min to make the atmosphere in the reaction tank into an inert atmosphere.

A nickel sulfate aqueous solution and a cobalt sulfate aqueous solution were mixed together at fractions at which the atomic ratio between Ni and Co reached 92.8:7.2 to prepare a liquid raw material mixture, and the liquid raw material mixture was continuously supplied to the reaction tank at a constant rate.

A 0.76 mol/L ammonium sulfate solution was used as a complexing agent and continuously supplied to the reaction tank at a constant rate at a fraction at which the ammonia concentration reached 0.23 mol/L.

Next, a 54 mass% aluminum sulfate aqueous solution was added while adjusting the flow rate at a fraction at which the atomic ratio of Ni, Co, and Al reached 90:7:3.

Furthermore, 32 mass% of sodium hydroxide was intermittently added thereto in order to maintain the pH of the solution in the reaction tank at 12.4 (value measured when the temperature of the solution was 40°C).

A nickel cobalt aluminum metal composite hydroxide-containing slurry obtained by the above-described reaction was stored in a slurry storage tank from the overflow pipe.

· Classification step

Next, the nickel cobalt aluminum metal composite hydroxide-containing slurry stored in the slurry storage tank was introduced into a wet type classifier liquid cyclone (T-10B-1 type, manufactured by Murata Kogyo Co., Ltd.) with the taper angle θ shown in FIG. 3 set to 16°) at a slurry sending flow rate of 0.84 m/sec.

The nickel cobalt aluminum metal composite hydroxide-containing slurry discharged from the lower portion of the wet type classifier liquid cyclone was classified and recovered.

· Reflux step

In addition, an operation of refluxing the nickel cobalt aluminum metal composite hydroxide-containing slurry discharged from the upper portion of the wet type classifier liquid cyclone to the reaction tank was repeated. The nickel cobalt aluminum metal composite hydroxide-containing slurry that was present in the slurry storage tank was refluxed to the reaction tank while being dehydrated as appropriate.

The obtained nickel cobalt aluminum metal composite hydroxide was washed, dehydrated, then dried at 105°C for 20 hours, and sieved, and particle size distribution measurement and composition analysis were carried out. The composition formula of the obtained nickel cobalt aluminum metal composite hydroxide was $Ni_{90.2}Co_{7.0}Al_{2.8}(OH)_{2.1}$.

The nickel cobalt aluminum metal composite hydroxide and a lithium hydroxide powder were weighed and mixed at fractions at which the mole ratio became Li/(Ni + Co + Al) of 1.15, thereby obtaining a mixture. After that, the obtained mixture was calcined at 760°C for 5 hours in an oxygen atmosphere, then washed, dehydrated, and dried, thereby obtaining CAM. A laminate cell was produced using the obtained CAM, and the measurement of the amount of battery swelling was measured. These results are shown in Table 2.

(Example 2)

· Slurry adjustment step

Water was put into a 500 L cylindrical reaction tank equipped with a stirrer equipped with a 220 φ propeller type stirring blade and an overflow pipe, then, a 32 mass% sodium hydroxide solution was added until the pH reached 11.0 (value measured when the temperature of the solution was 40°C), and the temperature was held at 60°C with a heater. Next, nitrogen gas was continuously blown into the reaction tank at a flow rate of 5 L/min to make the atmosphere in the reaction tank into an inert atmosphere.

A nickel sulfate aqueous solution, a cobalt sulfate aqueous solution, and a manganese sulfate aqueous solution were mixed together at fractions at which the atomic ratio among Ni, Co, and Mn reached 88:9:3 to prepare a liquid raw material mixture, and the liquid raw material mixture was continuously supplied to the reaction tank at a constant rate.

A 0.76 mol/L ammonium sulfate solution was used as a complexing agent and continuously supplied to the reaction tank at a constant rate at a fraction at which the ammonia concentration reached 0.07 mol/L. Furthermore, 32 mass% of sodium hydroxide was intermittently added thereto in order to maintain the pH of the solution in the reaction tank at 11.0 (value measured when the temperature of the solution was 40°C).

A nickel cobalt manganese metal composite hydroxide-containing slurry obtained by the above-described reaction was stored in a slurry storage tank from the overflow pipe.

· Classification step

Next, the nickel cobalt manganese metal composite hydroxide-containing slurry stored in the slurry storage tank was introduced into a wet type classifier liquid cyclone (T-10B-1 type, manufactured by Murata Kogyo Co., Ltd., taper angle θ: 16°) at a liquid cyclone sending flow rate of 0.47 m/sec.

The nickel cobalt manganese metal composite hydroxide-containing slurry discharged from the lower portion of the wet type classifier liquid cyclone was classified and recovered.

· Reflux step

In addition, an operation of refluxing the nickel cobalt manganese metal composite hydroxide-containing slurry discharged from the upper portion of the wet type classifier liquid cyclone to the reaction tank was repeated. The nickel cobalt manganese metal composite hydroxide-containing slurry that was present in the slurry storage tank was refluxed to the reaction tank while being dehydrated as appropriate.

The obtained nickel cobalt manganese metal composite hydroxide was washed, dehydrated, then dried at 105°C for 20 hours, and sieved, and particle size distribution measurement and composition analysis were carried out. The composition formula of the obtained nickel cobalt manganese metal composite hydroxide was $Ni_{88.3}Co_{8.9}Mn_{2.8}(OH)_{2.0}$.

A laminate cell was produced using CAM obtained in the same manner as in Example 1 except that the nickel cobalt manganese metal composite hydroxide was used, and the amount of battery swelling was measured. These results are shown in Table 2.

(Comparative Example 1)

· Slurry adjustment step

Water was put into a 500 L cylindrical reaction tank equipped with a stirrer equipped with a 220 φ propeller type stirring blade and an overflow pipe, then, a 32 mass% sodium hydroxide solution was added until the pH reached 12.0 (value measured when the temperature of the solution was 40°C), and the temperature was held at 40°C with a heater.

Next, nitrogen gas was continuously blown into the reaction tank at a flow rate of 5 L/min to make the atmosphere in the reaction tank into an inert atmosphere.

A nickel sulfate aqueous solution and a cobalt sulfate aqueous solution were mixed together at fractions at which the atomic ratio between Ni and Co reached 92.8:7.2 to prepare a liquid raw material mixture, and the liquid raw material mixture was continuously supplied to the reaction tank at a constant rate.

0.76 mol/L of an ammonium sulfate solution was used as a complexing agent and continuously supplied to the reaction tank at a constant rate at a fraction at which the ammonia concentration reached 0.23 mol/L. A 10.8 mass% aluminum sulfate aqueous solution was added while adjusting the flow rate at a fraction at which the atomic ratio of Ni, Co, and A1 reached 90:7:3.

Furthermore, 32 mass% of sodium hydroxide was intermittently added thereto in order to maintain the pH of the solution in the reaction tank at 12.0 (value measured when the temperature of the solution was 40°C).

The obtained nickel cobalt aluminum metal composite hydroxide was washed, dehydrated, then dried at 105°C for 20 hours, and sieved, and particle size distribution measurement and composition analysis were carried out. The composition formula of the obtained nickel cobalt aluminum metal composite hydroxide was $Ni_{90.1}Co_{6.8}Al_{3.1}(OH)_{2.1}$.

A laminate cell was produced using CAM obtained in the same manner as in Example 1 except that the nickel cobalt aluminum metal composite hydroxide was used, and the amount of battery swelling was measured. These results are shown in Table 2.

(Comparative Example 2)

A nickel cobalt aluminum metal composite hydroxide was produced in the same manner as in Example 1 except that the taper angle of the wet type classifier liquid cyclone was set to 9° and the sending flow rate was changed to 0.59 m/sec.

On the obtained nickel cobalt aluminum metal composite hydroxide, particle size distribution measurement and composition analysis were carried out. The composition formula of the obtained nickel cobalt aluminum metal composite hydroxide was $Ni_{90.0}Co_{7.0}Al_{3.0}(OH)_{2.1}$.

A laminate cell was produced using CAM obtained in the same manner as in Example 1 except that the nickel cobalt aluminum metal composite hydroxide was used, and the amount of battery swelling was measured. These results are shown in Table 2.

(Comparative Example 3)

· Slurry adjustment step

Water was put into a 500 L cylindrical reaction tank equipped with a stirrer equipped with a 220 φ propeller type stirring blade and an overflow pipe, then, a 32 mass% sodium hydroxide solution was added until the pH reached 12.6 (value measured when the temperature of the solution was 40°C), and the temperature was held at 60°C with a heater. Next, nitrogen gas was continuously blown into the reaction tank at a flow rate of 5 L/min to make the atmosphere in the reaction tank into an inert atmosphere.

A nickel sulfate aqueous solution, a cobalt sulfate aqueous solution, and a manganese sulfate aqueous solution were mixed together at fractions at which the atomic ratio among Ni, Co, and Mn reached 88:8:4 to prepare a liquid raw material mixture, and the liquid raw material mixture was continuously supplied to the reaction tank at a constant rate.

A 0.76 mol/L ammonium sulfate solution was used as a complexing agent and continuously supplied to the reaction tank at a constant rate at a fraction at which the ammonia concentration reached 0.23 mol/L. Furthermore, 32 mass% of sodium hydroxide was intermittently added thereto in order to maintain the pH of the solution in the reaction tank at 12.6 (value measured when the temperature of the solution was 40°C).

The obtained nickel cobalt manganese metal composite hydroxide was washed, dehydrated, then dried at 105°C for 20 hours, and sieved, and particle size distribution measurement and composition analysis were carried out. The composition formula of the obtained nickel cobalt manganese metal composite hydroxide was $Ni_{88.3}Co_{7.9}Mn_{3.9}(OH)_{2.0}$.

A laminate cell was produced using CAM obtained in the same manner as in Example 1 except that the nickel cobalt manganese metal composite hydroxide was used, and the amount of battery swelling was measured. These results are shown in Table 2.

[Table 2]

| | Classification step | Taper angle $\theta$ | Slurry sending flow rate | Ni/Co/Mn/Al | $D_{10}$ | $D_{30}$ | $D_{50}$ | $D_{70}$ | $D_{90}$ | $(D_{50} - D_{10})/ D_{30}$ | $(D_{90} - D_{50})/ D_{70}$ | $[(D_{50} - D_{10})/D_{30}]/ [(D_{90} - D_{50})/D_{70}]$ | Amount of battery swelling |
|---|---|---|---|---|---|---|---|---|---|---|---|---|---|
| | Present/absent | ° | m/sec | mol% | um | um | um | um | um | - | - | | $cm^3/g$ |
| Example 1 | Present | 16 | 0.84 | 90.2/7.0/-/2.8 | 2.8 | 3.7 | 4.5 | 5.3 | 6.8 | 0.46 | 0.43 | 1.06 | 008 |
| Example 2 | Present | 16 | 0.47 | 88.3/8.9/2.8/- | 5.4 | 7.2 | 8.7 | 10.4 | 13.1 | 0.45 | 0.43 | 1.06 | 008 |
| Comparative Example 1 | Absent | - | - | 90.1/6.8/-/3.1 | 1.8 | 3.0 | 3.9 | 5.0 | 7.1 | 0.71 | 0.63 | 1.12 | 0.14 |
| Comparative Example 2 | Present | 9 | 0.59 | 90.0/7.0/-/3.0 | 2.0 | 3.0 | 3.8 | 4.7 | 6.3 | 0.61 | 0.54 | 1.13 | 0.10 |
| Comparative Example 3 | Absent | - | - | 88317.9/391- | 1.7 | 2.8 | 3.6 | 4.6 | 6.2 | 0.68 | 0.57 | 1.18 | 0.33 |

As shown in Table 2, in the batteries of the examples, the amounts of battery swelling were suppressed more than in the comparative examples. Therefore, it was confirmed that the use of CAM produced using the precursor to which the present invention was applied makes it possible to produce batteries having a longer life.

[Reference Signs List]

1: Separator
2: Positive electrode
3: Negative electrode
4: Electrode group
5: Battery can
6: Electrolyte solution
7: Top insulator
8: Sealing body
10: Lithium secondary battery
21: Positive electrode lead
31: Negative electrode lead
100: Laminate
110: Positive electrode
111: Positive electrode active material layer
112: Positive electrode current collector
113: External terminal
120: Negative electrode
121: Negative electrode electrolyte layer
122: Negative electrode current collector
123: External terminal
130: Solid electrolyte layer
200: Exterior body
200a: Opening portion
1000: All-solid-state lithium-ion secondary battery

**Claims**

1. A precursor for a lithium secondary battery positive electrode active material comprising at least a nickel atom, wherein, in a volume-based cumulative particle size distribution curve that is obtained by laser diffraction type particle size distribution measurement, when a particle diameter ($\mu$m) at which a cumulative volume fraction from a small particle side becomes 10% is defined as $D_{10}$, a particle diameter ($\mu$m) at which the cumulative volume fraction from the small particle side becomes 30% is defined as $D_{30}$, a particle diameter ($\mu$m) at which the cumulative volume fraction from the small particle side becomes 50% is defined as $D_{50}$, a particle diameter ($\mu$m) at which the cumulative volume fraction from the small particle side becomes 70% is defined as $D_{70}$, and a particle diameter ($\mu$m) at which the cumulative volume fraction from the small particle side becomes 90% is defined as $D_{90}$, the $D_{10}$, the $D_{30}$, the $D_{50}$, the $D_{70}$, and the $D_{90}$ satisfy (1) to (3),

$$(1)\ (D_{50} - D_{10})/D_{30} \leq 0.6,$$

$$(2)\ (D_{90} - D_{50})/D_{70} \leq 0.6,$$

and

$$(3)\ 0.90 \leq [(D_{50} - D_{10})/D_{30}]/[(D_{90} - D_{50})/D_{70}] \leq 1.10.$$

2. The precursor for the lithium secondary battery positive electrode active material according to Claim 1, which is represented by a composition formula (A),

$$Ni_{1-x-y}Co_xM_yO_z(OH)_{2-\alpha} ...$$   Composition Formula (A)

(in the composition formula (A), $0 \leq x \leq 0.45$, $0 \leq y < 0.45$, $0 \leq z \leq 3$, $-0.5 \leq \alpha \leq 2$, and M is one or more metal elements selected from the group consisting of Mg, Ca, Sr, Ba, Zn, B, Al, Mn, Ga, Ti, Zr, Ge, Fe, Cu, Cr, V, W, Mo, Sc, Y, Nb, La, Ta, Tc, Ru, Rh, Pd, Ag, Cd, In, and Sn).

3. The precursor for the lithium secondary battery positive electrode active material according to Claim 1 or 2, wherein a value of the $D_{50}$ is less than 10 $\mu$m.

4. A method for producing a lithium secondary battery positive electrode active material, the method comprising: a step of mixing the precursor for the lithium secondary battery positive electrode active material according to any one of Claims 1 to 3 and a lithium compound and calcining the obtained mixture.

## FIG. 1A

## FIG. 1B

# FIG. 2A

# FIG. 2B

# FIG. 3

# FIG. 4

# FIG. 5

## INTERNATIONAL SEARCH REPORT

| | International application No. |
|---|---|
| | PCT/JP2021/022047 |

**A.  CLASSIFICATION OF SUBJECT MATTER**
Int. Cl. H01M4/505(2010.01)i, H01M4/525(2010.01)i
FI: H01M4/525, H01M4/505

According to International Patent Classification (IPC) or to both national classification and IPC

**B.  FIELDS SEARCHED**

Minimum documentation searched (classification system followed by classification symbols)
Int. Cl. H01M4/505, H01M4/525

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 2008-153197 A (SUMITOMO CHEMICAL CO., LTD.) 03 July 2008, claims 1-15, paragraphs [0009]-[0069], fig. 1-4, 7-9 | 1, 3-4<br>2 |
| Y | JP 2012-518871 A (UMICORE S.A.) 16 August 2012, example 1 | 2 |
| Y | JP 2017-033881 A (TOYOTA MOTOR CORP.) 09 February 2017, paragraphs [0029]-[0040] | 2 |
| A | JP 2013-232319 A (SUMITOMO CHEMICAL CO., LTD.) 14 November 2013 | 1-4 |

☐  Further documents are listed in the continuation of Box C.      ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>29.06.2021 | Date of mailing of the international search report<br>13.07.2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2021/022047

| Patent Documents referred to in the Report | Publication Date | Patent Family | Publication Date |
|---|---|---|---|
| JP 2008-153197 A | 03.07.2008 | US 2010/0055554 A1 claims 1-15, paragraphs [0011]-[0086], fig. 1-4, 7-9 WO 2008/062895 A1 | |
| JP 2012-518871 A | 16.08.2012 | US 2012/0104311 A1 example 1 WO 2010/094394 A1 EP 2399311 A KR 10-2011-0126653 A CN 102362378 A | |
| JP 2017-033881 A | 09.02.2017 | US 2017/0040609 A1 paragraphs [0066]-[0088] CN 106450267 A KR 10-2017-0017751 A | |
| JP 2013-232319 A | 14.11.2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020111817 A
- JP 2015043335 A
- JP 2002201028 A
- JP 6734491 B
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1